**Europäisches Patentamt**

**European Patent Office**

**Office européen des brevets**

(19)

(11) Veröffentlichungsnummer : **0 326 110 B1**

(12) # EUROPÄISCHE PATENTSCHRIFT

(45) Veröffentlichungstag der Patentschrift :
**15.04.92 Patentblatt 92/16**

(51) Int. Cl.⁵ : **C05G 3/04, C09K 17/00**

(21) Anmeldenummer : **89101281.7**

(22) Anmeldetag : **25.01.89**

(54) Verfahren zur Beeinflussung des Wachstums von Topfpflanzen.

(30) Priorität : **27.01.88 DE 3802376**

(43) Veröffentlichungstag der Anmeldung :
**02.08.89 Patentblatt 89/31**

(45) Bekanntmachung des Hinweises auf die
Patenterteilung :
**15.04.92 Patentblatt 92/16**

(84) Benannte Vertragsstaaten :
**AT BE CH DE FR GB IT LI NL**

(56) Entgegenhaltungen :
**EP-A- 0 192 954
DE-B- 1 006 871
FR-A- 720 963
US-A- 4 168 962**

(73) Patentinhaber : **Henning, Herbert Georg
Oskar-Cöster-Weg 10
W-8000 München 71 (DE)**

(72) Erfinder : **Henning, Herbert Georg
Oskar-Cöster-Weg 10
W-8000 München 71 (DE)**
Erfinder : **Buckl, Hans, Dr.
Eberhardsweg 2
W-8050 Freising/Tüntenhausen (DE)**
Erfinder : **Simmler-Hübenthal, Hubert
Regerstrasse 8
W-8052 Moosburg (DE)**

(74) Vertreter : **von Puttkamer, Nikolaus, Dipl.-Ing.
Pienzenauerstrasse 2
W-8000 München 80 (DE)**

EP 0 326 110 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Verfahren zur Beeinflussung des Wachstums von Topfpflanzen, Pflanzen in Balkonkästen und Pflanzen in Pflanzcontainern von Gartenbaubetrieben.

Ein gesundes Wachstum von Pflanzen erfordert ein ausgewogenes Verhältnis von Nährstoffen, Spurenelementen und Feuchtigkeit. Es sind Verfahren bekannt, bei denen ein optimales Wachstum der Pflanze dadurch erreicht wird, daß man dem Boden Nährstoffträger zumischt, vorzugsweise Tonmineralien oder Kunstharzionenaustauscher, die mit Nährstoffen aktiviert sind.

So beschreibt die DE-A- 15 92 812 ein Verfahren zur Herstellung von langsam und nachhaltig wirkenden Düngemitteln, das dadurch gekennzeichnet ist, daß in das Kaolinitschichtgitter von Kaolinen oder kaolinhaltigen Tonen durch Einlagerungs-, Verdrängungs- und/oder Schlepper-Reaktionen Salze und/oder Moleküle mit Düngerwirkung, vorzugsweise Harnstoff, Ammoniumsalze, wie Ammoniumphosphate, Nitrate oder anderen Stickstoffverbindungen und/oder Kalisalze, wie Kaliumchlorid, Kaliumphosphate, eingelagert werden.

Die DE-C- 35 02 171 beschreibt ein Mittel zur Melioration geschädigter oder mängelbehafteter Böden auf der Basis mindestens eines in ein Tonmineral eingelagerten mineralischen Düngers, das durch eine Mischung verschiedener Tonminerale aus der Gruppe der Kaoline, Montmorillonite, Serizite und/oder Illite gekennzeichnet ist. Der mineralische Dünger ist in größeren Mengen eingelagert.

Die DE-A- 35 17 645 betrifft ein Mittel zur Melioration geschädigter, mängelbehafteter und/oder schadstoffenthaltender Böden und Massen, bestehend aus der Kombination mindestens eines Stoffes hohen Ionenaustausch- und Quellvermögens mit einem mineralischen Dünger und/oder einem das Ionenaustauschvermögen aktivierenden und/oder das Wasseranlagerungsvermögen regulierenden Stoffes.

Die bekannten Verfahren eignen sich vor allem zum Einsatz in landwirtschaftlich genutzten Anbauflächen und Waldgebieten, zur Regenerierung und nährstoffverarmter Böden. Außerdem finden sich keine Angaben über die Menge an Nährstoffen, die in der Zwischenschicht des Tonminerals austauschbar eingelagert sind.

Die DE-B-1006871 betrifft ein nus Kalk-Tom-Humus-Komplex-verbindungen bestehendes Bodenverbesserungsmittel für Sanböden. Als Ton wird Bentonit verwendet, der mit einem hohen Überschuß von Nähzsalzim beladen ist.

Bei der Kultur von Topfpflanzen, Pflanzen in Balkonkästen und Pflanzen in Pflanzcontainern besteht weniger die Gefahr des Düngermangels als vielmehr die Gefahr einer Überdüngung durch Überdosierung herkömmlicher Nährlösungen im Gießwasser sowie durch zu häufigen Düngereinsatz.

Auch treten häufig Schäden durch Wahl der falschen Nährstoffkombination auf, da es gerade durch die Vielzahl der als Topfpflanzen beliebten Arten nicht immer leicht ist, die Verhältnisse der natürlichen Standorte ausreichend zu berücksichtigen.

Der Erfindung liegt die Aufgabe zugrunde, das Wachstum von Topfpflanzen, von Pflanzen in Balkonkästen sowie von Pflanzen in Pflanzcontainern von Gartenbaubetrieben durch gezielte Nährstoffzufuhr über lange Zeit zu optimieren und andererseits die beim übermäßigen Gießen mit Nährstofflösungen auftretende Überdüngung abzupuffern.

Die Erfindung betrifft somit ein Verfahren zur Beeinflussung des Wachstums von Topfpflanzen, Pflanzen in Balkonkästen und Pflanzen in Pflanzencontainern von Gartenbaubetrieben, das dadurch gekennzeichnet ist, daß man einem üblichen Kultursubstrat smektitische Tonmineralien mit hohem Quellvermögen, in deren Zwischenschichten Nährstoffe austauschbar in dem Maße eingelagert sind, daß die Aufnahmekapazität für die Nährstoffe bis zu 80% ausgenützt ist, zusetzt.

Das erfindungsgemäße Verfahren eignet sich besonders zur Jungpflanzenanzucht, da die Tonmineralien nur soviel Nährstoffe abgeben, daß die frisch eingetopften Pflanzen in der Anfangs entwicklung optimal versorgt sind und die Gefahr der Überdüngung nicht besteht.

Der Einsatz der quellfähigen Tone bringt den weiteren Vorteil, daß aufgrund des Wasserspeichervermögens der Tone eine gleichmäßige Feuchtigkeit erreicht wird. Aufgrund der verhältnismäßig hohen Ionenaustauschkapazität der Tonmineralien werden die sauren organischen Abbauprodukte, insbesondere Huminsäuren, gebunden, wodurch ein für das Wachstum günstiger pH-Wert erreicht bzw. eingehalten wird. Mit der Ionenaustauschkapazität ist auch die Nährstoffspeicherung verbunden, wobei insbesondere die kationischen Nährstoffe ($NH_4^+$, $K^+$ gespeichert werden. Einerseits geben die mit den Nährstoffen teilweise beladenen Tonmineralien die Nährstoffe bei geringerer Nährstoffzufuhr (wenn nur mit Wasser gegossen wird) allmählich ab; andererseits nehmen sie Nährstoffe auf, wenn diese im Gießwasser in größeren Konzentrationen zugesetzt werden. Die teilweise beladenen Tonmineralien wirken also gewissermaßen als Nährstoffpuffer.

Vorzugsweise verwendet man als teilweise beladenes Tonmineral Bentonit.

Der Gehalt an mit Nährstoffen beladenen Tonmineralien beträgt zweckmäßig 2 bis 50 Vol.-%, vorzugsweise 10 bis 20 Vol-% (bezogen auf Kultursubstrat und beladene Tonmineralien).

Vorzugsweise wird das Tonmineral mit Pflanzennährstoffen aus handelsüblichen Mineraldüngerformulierungen, d.h. mit den Hauptund Spurennährstoffen N, P, K, Ca, Mg, Fe, Cu, B, Zn, beladen, wobei das Gewichtsverhältnis der Grundnährstoffe N : $P_2O_5$ : $K_2O$ etwa 7 bis 10 : 8 : 10 bis 15 beträgt und wobei die Düngermenge so gewählt ist, daß die N-Konzentration je kg Tonmineral bei 0,4 bis 10 g, vorzugsweise bei 1 bis 5 g, liegt.

Die N-Fraktion in den Grundnährstoffen besteht etwa zu gleichen Gewichtsanteilen aus Nitrat- und Ammoniumstickstoff. Die N-Fraktion kann zum Teil auch durch Harnstoff ergänzt sein.

Die vorhandene Ionenaustauschkapazität der Tonmineralien wird durch die zugegebenen Pflanzennährstoffe zweckmäßig zu 10 bis 80 %, vorzugsweise zu 20 bis 50 % ausgenutzt.

Die mit den Nährstoffen aktivierten Tonmineralien werden vorzugsweise in Granulatform eingesetzt. Beispielsweise werden sie in einer Körnung von 0,15 bis 5 mm, vorzugsweise von 0,2 bis 2 mm, der im Handel erhältlichen Blumenerde für Topfpflanzen zugemischt, wobei der Anteil der Tonmineralien etwa 2 bis 50 Vol.-%, vorzugsweise 10 bis 20 Vol-%, beträgt.

Ein vorzugsweise im Balkonbereich einzusetzendes Granulat, welches im Verhältnis 20 : 80 Vol-% mit Blumenerde und/oder Torf gemischt wird, wobei das Granulat etwa 2 g N je kg enthalten soll, kann wie folgt hergestellt werden.

1. Mischung einer Düngerkomponente aus Ein- oder Mehrstoffdüngern, entsprechend dem bevorzugten Nährstoffverhältnis N : $P_2O_5$ : $K_2$ = 7 - 10 : 8 : 8 bis 15 plus Spurenelemente. Die derart hergestellte und im Beispiel 2 verwendete Düngerkomponente enthält 7,8 % N, 7,6 % $P_2O_5$, 15 % $K_2O$ und 0,2 % Spurenelemente.

2. 26,2 g dieser Düngerkomponente werden in 973,8 g feinvermahlenen Calciumbentonit feucht einaktiviert und granuliert.

3. Nach dem Trocknen auf 5 bis 6 Gew.-% $H_2O$ wird die gewünschte Korngrößenfraktion abgesiebt.

Ein überraschender Vorteil des erfindungsgemäßen Verfahrens besteht darin, daß trotz des geringen Anteils an Nährstoffionen nicht nur das Pflanzenwachstum als solches entscheidend verbessert werden kann, sondern auch die Blütenzahl gesteigert und ein verfrühter Blütebeginn und ein gedrungenerer, kräftigerer Wuchsaufbau der Pflanzen erzielt werden kann.

Die verbesserte Entwicklung der Pflanzen wird durch das Zusammenwirken mehrerer bodenverbessernder Eigenschaften (ausgewogenes und gleichbleibendes Düngerangebot, Wasserbindevermögen, Ionenaustauschkapazität, Bildung von Ton-Humus-Komplexen, Sorption von Nährstoffen) der verwendeten Tonmineralien erzielt.

Die nachstehenden Beispiele zeigen, daß durch die Beimischung von Pflanzennährstoffen zu Bentonit eine Art von Depotdünger mit bodenverbessernden Eigenschaften erzeugt werden kann, der bei Topfpflanzen und im Balkonbereich die Notwendigkeit einer Düngung der Pflanzen mit Hilfe von Düngesalzen über das Gießwasser einschränkt bzw. ersetzt.

Beispiel 1

Es wurden jeweils 3 Pelargonienpflanzen in Pflanzkästen, die mit je 10 Liter Kultursubstrat gefüllt waren, gezüchtet. Die 3 Kultursubstrate waren wie folgt zusammengesetzt:

```
    Verhältnis  Blumenerde  :  Bentonit (% Vol)

A  :         100          :       0

B  :          85          :      15

C  :          70          :      30.
```

Die Düngerkonzentration betrug 300 mg N je Liter Kultursubstrat sowie $P_2O_5$ und $K_2O$ in den dem Nährstoffverhältnis N : $P_2O_5$ : $K_2O$ wie etwa 8 : 8 : 15 entsprechenden Mengen.

Ab der 4. Versuchswoche wurde gleichmäßig über das Gießwasser nachgedüngt, wobei pro Liter Gießwasser etwa 2 g Mehrnährstoffdünger zugesetzt wurden.

Die Bewertung der Versuchsvarianten A, B und C erfolgte anhand von drei Kriterien:

1. Wachstum und Entwicklung der Einzelpflanzen (photographische Erfassung)

2. Zahl der gebildeten Blüten während der Versuchslaufzeit

3. Grad der Durchwurzelung des Kultursubstrates.

Zu 1) Wachstum und Entwicklung der Einzelpflanzen

Die Pflanzen der Variante B und - etwas schwächer ausgeprägt - auch die Pflanzen der Variante C zeigten bis zur 8. Versuchswoche eine zügigere Entwicklung als die Pflanzen der Variante A. In der Folgezeit trat dann folgende Entwicklung ein:

Variante A: Die Pflanzen entwickelten (wahrscheinlich aufgrund der kontinuierlichen Düngung über das Gießwasser) einen etwas übermässigen Blattapparat und im Verhältnis hierzu weniger, aber kräftige Blütendolden.

Variante B: Das Wachstum der Pflanzen war sehr gut; durch stärkere Verzweigung entstanden reichblühende Einzelpflanzen von gedrungenem Wuchs.

Variante C: Prinzipiell ähnliche Entwicklung wie B, jedoch weniger kontinuierliche Blütenbildung.

Zu 2) Zahl der gebildeten Blüten während der Versuchslaufzeit

|  | A | B | C |
|---|---|---|---|
| Während der Versuchslaufzeit entnommen | 36 | 48 | 46 |
| Bei Versuchsende noch vorhanden | 13 | 19 | 15 |
| Gesamtblütenzahl | 49 | 67 | 61 |

Für die beiden Varianten mit Bentonit (B, C) ergibt sich eine höhere Zahl an hervorgebrachten Blüten, mit leicht positiver Tendenz für B. Diese Entwicklung ist wahrscheinlich auf eine leichte Überdüngung in der zweiten Versuchshälfte, die durch den Bentonit in den Varianten B und C abgepuffert werden konnte, zurückzuführen.

Zu 3) Intensität der Durchwurzelung des Kultursubstrates

Variante A zeichnete sich bei Versuchsende durch eine gute Durchwurzelung des gesamten Substrates aus.

Variante B zeigte eine gleich gute Durchwurzelung wie Variante A.

Bei Variante C konzentrierte sich die Hauptwurzelmasse im Randbereich des Substratballens. Die das Substrat durchziehenden Wurzeln sind schwächer bzw. dünner als bei A und B. Hieraus läßt sich ableiten, daß die Durchwurzelbarkeit des Substrates ab einer Bentonitzugabe von etwa 15 bis 20 % aufgrund der hierdurch bedingten Dichtlagerung für Pelargonien erschwert wird.

Zusammenfassend kann festgestellt werden, daß die Pflanzen der Variante B die beste Entwicklung gezeigt haben. Ihr Wachstum war kontinuierlich und ausgeglichen, der Blütenansatz reichlich.

Insbesondere an der Entwicklung in der zweiten Versuchshälfte wird die ausgleichende Pufferwirkung des Bentonits bezüglich der auf die Pflanze einwirkenden Düngermenge aus der Bodenlösung deutlich. Der offensichtliche Nährstoffüberschuß wird nur bei der Variante A (ohne Bentonit) sichtbar.

Beispiel 2

Es wurden Balkonkästen mit jeweils 5 Pflanzen Impatiens-Neu Guinea-Hybriden bepflanzt. Das Fassungsvermögen eines Balkonkastens mit den Abmessungen 100 x 18 x 20 cm beträgt etwa 26 Liter Kultursubstrat. Als Kultursubstrat wurde Weißtorf verwendet, dem pro Liter 4 g $CaCO_3$ zugesetzt wurden, so daß sich ein pH-Wert um 5,5 einstellte. Steigende Mengen an Bentonit, die dem Torf zugemischt wurden, erhöhen den pH-Wert im Substrat bis maximal 6,5 bei 40 Vol.-% Zugabe an belandenem Tonmineral. Eine Düngerbeimischung mit Mehrnährstoffdünger (MND) erfolgte, mit Ausnahme von Versuchsglied (VG) 3 und 4 zu Versuchsbeginn. Den anfangs ungedüngten Varianten (VG 3 und 4) wurde eine praxisübliche laufende Nachdüngung verabreicht. Es wurde der in Tabelle 1 angegebene Versuchsplan angewendet.

Tabelle 1: Versuchsplan

VG Substratmischung | Düngerkonzentration

| VG | Substratmischung | Düngerkonzentration |
|---|---|---|
| 1 | Weißtorf | 2,6 g MND/1 Kultursubstrat $N:P_2O_5:K_2O = 8 : 8 : 15$ |
| 2 | Weißtorf | 5,2 g MND/1 Kultursubstrat $N:P_2O_5:K_2O = 8 : 8 : 15$ |
| 3 | Weißtorf + 10 Vol.-% Bentonit | - |
| 4 | Weißtorf + 20 Vol.-% Bentonit | - |
| 5 | Weißtorf + 10 Vol.-% Bentonit | niedrig (0,2 g N je Liter Substrat $N:P_2O_5:K_2O = 8 : 8 : 15$ |
| 6 | Weißtorf + 10 Vol.-% Bentonit | hoch (0,4 g N je Liter Substrat $N:P_2O_5:K_2O = 8 : 8 : 15$ |
| 7 | Weißtorf + 20 Vol.-% Bentonit | niedrig (wie bei VG 5) |
| 8 | Weißtorf + 20 Vol.-% Bentonit | hoch (wie bei VG 6) |
| 9 | Weißtorf + 40 Vol.-% Bentonit | niedrig (wie bei VG 5) |
| 10 | Weißtorf + 40 Vol.-% Bentonit | hoch (wie bei VG 6) |

Die Kulturdaten sind in Tabelle 2 angegeben:

Tabelle 2: Kulturdaten

| | |
|---|---|
| Stecken: | 28.4.1987 in Weißtorf + 4 g $CaCO_3$ + 0,5 g MND (N:$P_2O_5$:$K_2O$ =15:11:15) pro Liter Substrat |
| Topfen: | 14.5.1987 in TKS1 (Topfkultursubstrat mit wenig Dünger) + 2 g $CaCO_3$ |
| Auspflanzen: | 7.7.1987 in Balkonkästen (nach Versuchsplan von Tabelle 1); 5 Pflanzen pro Kasten |
| Nachdüngung für VG 3 und VG 4: | jeweils 2 % MND (N:$P_2O_5$:$K_2O$ = 15:11:15) 2 Liter pro Kasten jeweils zu vier Terminen |
| Bewässerung: | nach Bedarf von Hand mit Leitungswasser. |

Die Versuchsergebnisse sind in Tabelle 3 angegeben:

## Tabelle 3 Versuchsergebnisse

|       |    | Pflanzenhöhe in cm je Pfl. | Pflanzendurchm. in cm je Pfl. | Frischgewicht in g je Pfl. |
|-------|----|----------------------------|-------------------------------|----------------------------|
| VG    | 1  | 28,7                       | 50,1*                         | 451,0**                    |
| VG    | 2  | 25,2                       | 43,7                          | 372,2                      |
| VG    | 3  | 23,4                       | 38,8                          | 273,8                      |
| VG    | 4  | 23,5                       | 37,1                          | 268,8                      |
| VG    | 5  | 24,9                       | 44,3                          | 426,1*                     |
| VG    | 6  | 27,8                       | 48,9*                         | 494,2**                    |
| VG    | 7  | 24,8                       | 40,2                          | 355,0                      |
| VG    | 8  | 26,2                       | 47,8*                         | 514,4**                    |
| VG    | 9  | 23,1                       | 39,7                          | 297,1                      |
| VG    | 10 | 26,3                       | 44,1                          | 453,8*                     |

\* signifikanter Unterschied zu VG3 und VG4

\*\* hochsignifikanter Unterschied zu VG3 und VG4

Aus Tabelle 3 ist ersichtlich, daß die Pflanzen von VG 1 und 6 über den Versuchszeitraum von 12 Wochen deutlich höher, sowie diejenigen von VG 8 und 10 höher als die von VG 3 und 4 gewachsen sind.

Der Pflanzendurchmesser ist wieder bei VG 1,6 und 8 signifikant größer als bei VG 3 und 4. Auch VG 2, 5 und 10 weisen immer noch ein deutlich besseres Ergebnis als VG3 und 4 auf. Bezüglich des Auswertungsmerkmales "Pflanzenfrischgewicht" erbringen VG 8 und 6 die mit Abstand höchsten Werte.

### Diskussion der Ergebnisse

Die geringen Erträge in den Parzellen ohne Startdüngung bzw. mit laufender Nachdüngung (VG 3 und VG 4) sind in erster Linie auf ein zu geringes Nährstoffangebot zurückzuführen. Der verregnete Sommer 1987 gestattete nur wenige Düngetermine, weil ein wassergesättigtes Substrat eine zugegebene Düngerlösung am Kastenboden praktisch sofort wieder abgibt.

Erfahrungsgemäß läßt sich in reinen Torfsubstraten sehr gut kultivieren. Dies bestätigen auch die Ertragsergebnisse von VG 1. Voraussetzung sind eine entsprechende Aufkalkung (4 bis 5 g $CaCO_3$/Liter Substrat) und ein dosiertes Düngerangebot. Ohne Bentonit (VG1 und 2) scheint nur eine Startdüngergabe von 2 bis 3 g Mehrnährstoffdünger (MND; $N:P_2O_5:K_2O$ = 15:11:15) pro Liter Substrat möglich, da die Ergebnisse von VG 2 mit etwa 5 g MND/Liter Substrat eher depressives Wachstum aufzeigen. Wesentlich unkomplizierter verläuft die Düngerversorgung bei Bentonit-Substratzumischungen. Die Pufferwirkung des Tonminerals läßt eine höhere Startdüngung zu, wobei die Nährstoffe sukzessiv an die Pflanzen weitergegeben werden. Genau umgekehrt zum reinen Torfsubstrat ist bei Bentonit-Substratmischungen eine höhere Düngerstufe möglich. Ohne weitere Nachdüngung ist die Düngerversorgung der Pflanzen z.B. für eine Balkonkastensaison sichergestellt.

Aufgrund der vorhandenen Verschlämmungsgefahr des Bentonitsubstrates bei einem zu hohen Mischungsverhältnis Torf : Bentonit wird eine Zugabe von etwa 20 Vol.-% Bentonit zu 80 % Torf bevorzugt.

### Beispiel 3

Zur Prüfung des Nährstoffrückhaltevermögens wurde Calciumbentonit unterschiedlich stark mit Dünger beladen (Nährstoffverhältnis: ($N:P_2O_5:K_2O$=8:8:15).

Beladungsstufe A    6,25 N/kg Bentonit (N= Nährstoff)

Beladungsstufe B    10 g N/kg Bentonit

Der beladene Bentonit wurde mit Torf gemischt, so daß sich ein Gesamtstickstoffgehalt von 500 mg N/l Kultursubstrat (Torf+Bentonit) ergab. Das Kultursubstrat wurde in einen Zylinder eingefüllt, dessen Unterseite durch ein Drahtgeflecht und ein daraufliegendes Filterpapier verschlossen war. Auf das Substrat wurde Wasser getropft (3 ml/Minute) und das am unteren Ende des Zylinders austretende Sickerwasser aufgefangen. Im Sickerwasser wurde der Gehalt an N, P und K bestimmt.

Tabelle 4 zeigt deutlich, daß das Nährstoffrückhaltevermögen bei geringer Beladung des Bentonits größer ist als bei starker Beladung. Beim Element K ist die Abhängigkeit der Rückhaltekraft vom Grad der Aufdüngung des Bentonits besonders deutlich, was durch das bekannte Kationenaustauschverhalten des Bentonits zu erklären ist. N setzt sich zusammen aus Ammonnitrat-bzw. Harnstoff-Stickstoff, so daß hier die Rückhaltekraft infolge Kationenaustausches weniger ausgeprägt ist.

Tabelle 4

| Verlust durch Auswaschen in % | | | | | | | | |
|---|---|---|---|---|---|---|---|---|
| Sickerwasser | 100 ml | | | 200 ml | | | 600 ml | | |
| | % N | % P | % K | % N | % P | % K | % N | % P | % K |
| Beladungsstufe A 6,25 N/kg Bentonit | 25 | 3 | 10 | 50 | 5 | 25 | 65 | 20 | 40 |
| Beladungsstufe B 10 g N/kg Bentonit | 30 | 8 | 30 | 60 | 15 | 50 | 70 | 30 | 70 |

**Patentansprüche**

1. Verfahren zur Beeinflussung des Wachstums von Topfpflanzen, Pflanzen in Balkonkästen und Pflanzen in Pflanzcontainern von Gartenbaubetrieben, dadurch gekennzeichnet, daß man einem üblichen Kultursubstrat smektitische Tonmineralien mit hohem Quellvermögen, in deren Zwischenschichten Nährstoffe austauschbar in dem Maße eingelagert sind, daß die Aufnahmekapazität für die Nährstoffe bis zu 80% ausgenützt ist, zusetzt.

2. Verfahren nach Anspruch 1, dadurch gekennzeichnet, daß man dem Kultursubstrat mit Nährstoffen beladenen Bentonit zusetzt.

3. Verfahren nach Anspruch 1 oder 2, dadurch gekennzeichnet, daß der Gehalt an mit Nährstoffen beladenen Tonmineralien 2 bis 50 Vol.-%, vorzugsweise 10 bis 20 Vol-% (bezogen auf Kultursubstrat und beladene Tonmineralien), beträgt.

4. Verfahren nach einem der Ansprüche 1 bis 3, dadurch gekennzeichnet, daß man die Tonmineralien mit Pflanzennährstoffen aus handelsüblichen Mineraldüngerformulierungen belädt.

5. Verfahren nach einem der Ansprüche 1 bis 4, dadurch gekennzeichnet, daß das Verhältnis der Grundnährstoffe N : $P_2O_5$ : $K_2O$ etwa 7 bis 10 : 8 : 10 bis 15 beträgt, wobei die Düngermenge so gewählt ist, daß die N-Konzentration je kg Tonmineral bei 0,4 bis 10 g, vorzugsweise bei 1 bis 5 g, liegt.

6. Verfahren nach Anspruch 5, dadurch gekennzeichnet, daß die N-Fraktion in den Grundnährstoffen etwa zu gleichen Gewichtsanteilen aus Nitrat- und Ammoniumstickstoff besteht.

7. Verfahren nach Anspruch 6, dadurch gekennzeichnet, daß die N-Fraktion zum Teil durch Harnstoff ergänzt ist.

8. Verfahren nach einem der Ansprüche 1 bis 7, dadurch gekennzeichnet, daß man die vorhandene Ionenaustauschkapazität der Tonmineralien durch die zugegebenen Pflanzennährstoffe zu 10 bis 80 %, vorzugsweise zu 20 bis 50 %, ausnutzt.

9. Verfahren nach einem der Ansprüche 1 bis 8, dadurch gekennzeichnet, daß man die mit Nährstoffen beladenen Tonmineralien in Granulatform einsetzt.


## Claims

1. Method of influencing the growth of pot plants, plants in window boxes and plants in plant containers of horticultural enterprises, characterised in that smectitic clay minerals having a high swelling capacity, in whose intermediate layers nutrients are intercalated exchangeably to such an extent that the nutrient uptake capacity is utilised to 80%, are added to a conventional culture substrate.

2. Method according to Claim 1, characterised in that nutrient-loaded bentonite is added to the culture substrate.

3. Method according to Claim 1 or 2, characterised in that the content of nutrient-loaded clay minerals is 2 to 50% by volume, preferably 10 to 20% by volume (relative to culture substrate and loaded clay minerals).

4. Method according to one of Claims 1 to 3, characterised in that the clay minerals are loaded with plant nutrients from commercially available inorganic fortiliser formulations.

5. Method according to one of Claims 1 to 4, characterised in that the ratio of the macronutrients $N:P_2O_5:K_2O$ is approximately 7 to 10:8:10 to 15, the amount of fertiliser being chosen in such a way that the N concentration per kg of clay mineral is 0,4 to 10 g, preferably 1 to 5 g.

6. Method according to Claim 5, characterised in that the N fraction in the in the macronutrients consists of approximately equal amounts by weight of nitrate nitrogen and ammonia nitrogen.

7. Method according to Claim 6, characterised in that part of the N fraction is complemented by urea.

8. Method according to one of Claim 1 to 7, characterised in that 10 to 80%, preferably 20 to 50%, of the existing ion exchange capacity of the clay minerals is utilised by the added plant nutrients.

9. Method according to one of Claim 1 to 8, characterised in that the nutrient-loaded clay minerals are employed in granule form.


## Revendications

1. Procédé pour influencer la croissance de plantes en pot, de plantes en jardinière et de plantes en conteneur, dans des entreprises de jardinage, caractérisé en ce que l'on ajoute, à un substrat de culture habituel, des minéraux argileux smectiques à capacité de gonflement élevée, dans les couches intermédiaires desquelles des substances nutritives sont incorporées, de façon à pouvoir être échangées, dans la mesure où on utilise jusqu'à 80 % de la capacité d'absorption pour les substances nutritives.

2. Procédé conforme à la revendication 1, caractérisé en ce que l'on ajoute au substrat de culture de la bentonite chargée de substances nutritives.

3. Procédé conforme à la revendication 1 ou 2, caractérisé en ce que la teneur en minéraux argileux chargés de substances nutritives vaut de 2 à 50 % en volume, de préférence de 10 à 20 % en volume (par rapport au substrat de culture et aux minéraux argileux chargés).

4. Procédé conforme à l'une des revendications 1 à 3, caractérisé en ce que l'on charge les minéraux argileux avec des substances nutritives pour les plantes, choisies parmi les formulations commerciales d'engrais minéraux.

5. Procédé conforme à l'une des revendications 1 à 4, caractérisé en ce que les proportions de substances nutritives fondamentales $N/P_2O_5/K_2O$ valent environ (7-10)/8/(10-15), la quantité d'engrais étant choisie de telle sorte que la concentration d'azote vaille de 0,4 à 10 g, et de préférence de 1 à 5 g, par kg de minéraux argileux.

6. Procédé conforme à la revendication 5, caractérisé en ce que la fraction azotée des substances nutritives fondamentales est constituée, en parties en poids à peu près égales, d'azote nitrique et d'azote ammoniacal.

7. Procédé conforme à la revendication 6, caractérisé en ce que la fraction azotée est partiellement complétée par de l'urée.

8. Procédé conforme à l'une des revendications 1 à 7, caractérisé en ce que l'on utilise de 10 à 80 %, et de préférence de 20 à 50 %, de la capacité existante d'échange d'ions des minéraux argileux, pour les substances nutritives ajoutées pour les plantes.

9. Procédé conforme à l'une des revendications 1 à 8, caractérisé en ce que l'on utilise sous forme de granulés les minéraux argileux chargés de substances nutritives.